# EUROPEAN PATENT APPLICATION

(11) **EP 4 224 386 A1**
(43) Date of publication of application: **09.08.2023**
(21) Application number: 21874418.3
(22) Date of filing: 27.09.2021
(51) Int. Cl.: G06Q 10/04, G06Q 10/08, G06Q 30/06

(54) **COMMODITY OBJECT PROCESSING METHOD, COMMODITY OBJECT INFORMATION PROCESSING METHOD, PAGE, APPARATUS, AND ELECTRONIC DEVICE**

(30) Priority: 30.09.2020 CN 202011062274
(71) Applicant: ALIBABA GROUP HOLDING LIMITED, George Town, Grand Cayman (KY)
(72) Inventor: QIAO, Junping, Hangzhou, Zhejiang 311121 (CN)
(74) Representative: Patentgruppen A/S
(86) International application number: PCT/CN2021/120862
(87) International publication number: WO 2022/068758

(57) **Abstract**

A method, an apparatus, and an electronic device for processing product objects are disclosed by the embodiments of the present application. The method includes: determining a plurality of product objects in a target collection associated with a user; determining at least one target product object that supports a same target logistics plan from the target collection; generating a page corresponding to the target collection, and aggregating the at least one target product object into a same area for display. Through the embodiments of the present application, it is beneficial to help users to better enjoy a higher-quality logistics service provided by target logistics plans.

## Description

This application claims the priority of the Chinese Patent Application No. 202011062274.5 filed on 30 September 2020, and entitled "Processing Method, Apparatus and Electronic Equipment for Product Objects", the entire contents of which are incorporated into this application by reference.

### Technical Field

The present application relates to the technical field of product object information processing, in particular to methods, apparatuses, and electronic devices for processing product objects.

### Background

In the cross-border e-commerce system, logistics accounts for a large proportion of the cost, and some relatively high-quality logistics services are even more difficult to achieve. For example, if a buyer in Spain purchases a product from a Chinese seller through a cross-border e-commerce platform, although the seller can bear the shipping fee according to the ordinary logistics plan, it may take a month or even longer to deliver the product. However, if the buyer is provided with a faster and time-effective logistics plan such as "ten days arrived", it will be necessary to occupy a better logistics route (for example, an air freight route, etc.) or to provide additional fees to the logistics service provider. This will increase the logistics cost. If this part of the cost is borne by the buyer, this means that the buyer needs to pay a higher fee, which is not conducive to the conclusion of the transaction. If it is borne by the seller, this will increase the cost for the seller, and even exceed the bearable range of the seller, so that the seller will not accept such logistics plan. Therefore, in practical applications, common logistics plans are usually used, but this will greatly limit the browsing-transaction conversion rate in the system.

As far as a system is concerned, helping sellers to increase the conversion rate is always the goal pursued by the system, and this is also an important indicator to measure the capabilities provided by the system. If the above purpose cannot be achieved, for example, a user browses a product object and has a strong desire to purchase, but gives up the purchase due to logistics problems, this will cause a large waste of resources consumed by the system for aspects such as storage and transmission of product object information, user information, etc.

Therefore, how to more conveniently provide users in a cross-border e-commerce system with a better logistics service and thereby reduce a waste of resources has become a technical problem that needs to be solved by one skilled in the art.

### Summary

The present application provides a method, an apparatus and an electronic device for processing product objects, which is beneficial to help users better enjoy a higher-quality logistics service proposed by a target logistics plan.

The present application provides the following solutions:

A method for processing product objects includes:
determining multiple product objects in a target collection associated with a user;
determining at least one target product object that supports a same target logistics plan from the target collection; and
generating a page corresponding to the target collection, and aggregating the at least one target product object into a same area for display.

A method for processing product object information includes:
receiving a request to display a page corresponding to a target collection;
determining multiple product objects in the target collection and at least one target product object supporting a same target logistics plan; and
displaying the page, and aggregating the at least one target product object into a same area for display.

A page,
the page being used to display information of multiple product objects in a target collection associated with a user; and
the page including a first area, the first area being used to aggregate and display at least one target product object supporting a same target logistics plan in the target collection.

A method for processing product objects includes:
determining multiple product objects in a target collection associated with a first user, wherein the multiple product objects are associated with at least one second user, the first user is a user of a first country, and the second user is a user of a second country;
determining at least one target product object that supports a same target logistics plan from the target collection;
generating a page corresponding to the target collection, and aggregating the at least one target product object into a same area for display; and
after receiving a request for transaction order generation, combining a plurality of target product objects included in the request into a same transaction order for transport through a same target logistics plan, wherein the same target logistics plan includes a first logistics stage and a second logistics stage, the plurality of target product objects is respectively transported to a target collection destination in the second country in the first logistics stage, and the plurality of target product objects is consolidated for shipping to a delivery address associated with the first user in the first country in the second logistics stage.

An apparatus for processing product objects includes:
a collection information determination unit configured to determine multiple product objects in a target collection associated with a user;
a target product object determination unit configured to determine at least one target product object that supports a same target logistics plan from the target collection; and
a page generation unit configured to generate a page corresponding to the target collection, and aggregate the at least one target product object into a same area for display.

An apparatus for processing product object information includes:
a request receiving unit configured to receive a request for displaying a page corresponding to a target collection;
a target product object determination unit configured to determine multiple product objects in the target collection and at least one target product object supporting a same target logistics plan; and
an aggregation display unit configured to display the page, and aggregate the at least one target product object into a same area for display.

An apparatus for processing product objects includes:
a collection information determination unit configured to determine multiple product objects in a target collection associated with a first user, wherein the multiple product objects are associated with at least one second user, the first user is a user of a first country, and the second user is a user of a second country;
a target product object determination unit configured to determine at least one target product object that supports a same target logistics plan from the target collection;
a page generation unit configured to generate a page corresponding to the target collection, and aggregate the at least one target product object into a same area for display; and
an order generation unit configured to combine, after receiving a request for transaction order generation, a plurality of target product objects included in the request into a same transaction order for transport through a same target logistics plan, wherein the same target logistics plan includes a first logistics stage and a second logistics stage, the plurality of target product objects is respectively transported to a target collection destination in the second country in the first logistics stage, and the plurality of target product objects is consolidated for shipping to a delivery address associated with the first user in the first country in the second logistics stage.

According to the specific embodiments provided by the present application, the present application discloses the following technical effects:

Through the embodiments of the present application, it is possible to determine a support situation of a target logistics plan by product objects in a target collection, and aggregate at least one product object supporting the same target logistics plan into a same area for display on a page corresponding to the target collection. In this way, it is convenient for a user to select at least one product object that supports the same target logistics plan, thus avoiding a situation that some product objects that support the target logistics plan are not selected due to reasons such as joining the target collection relatively early, and thereby helping the user to better enjoy the higher-quality logistics services proposed by the target logistics plan.

In practical implementations, a target logistics plan can be associated with conditional information, and the specific conditional information can be set through information such as the number of stores associated with product objects supporting the target logistics plan in a same transaction order, or an attribute value associated with a total price, etc. In this way, by aggregating and displaying multiple product objects that support the same target logistics plan, while avoiding a user's missed selection, it is also easy to satisfy corresponding condition(s) of the target logistics plan. This thereby provides the user with logistics services through a better logistics plan, while facilitating the control of logistics cost at the same time, thereby achieving the purpose of reducing the waste of resources.

Apparently, implementing any product of the present application does not necessarily need to achieve all the above-mentioned advantages at the same time.

### Brief Description of the Drawings

In order to more clearly illustrate the technical solutions in the embodiments of the present application or existing technologies, accompanying drawings that are needed and used in the embodiments will be briefly described below. Apparently, the accompanying drawings in the following description represent only some embodiments of the present application. For one of ordinary skill in the art, other drawings can also be obtained based on these drawings without making any creative effort.
FIG. 1 is a schematic diagram of a system architecture provided by the embodiments of the present application.
FIG. 2 is a flowchart of a first method provided by the embodiments of the present application.
FIGS. 3-1 and 3-2 are schematic diagrams of interfaces provided by the embodiments of the present application.
FIG. 4 is a flowchart of a second method provided by the embodiments of the present application.
FIG. 5 is a flowchart of a third method provided by the embodiments of the present application.
FIG. 6 is a schematic diagram of a first device provided by the embodiments of the present application.
FIG. 7 is a schematic diagram of a second device provided by the embodiments of the present application.
FIG. 8 is a schematic diagram of a third device provided by the embodiments of the present application.
FIG. 9 is a schematic diagram of an electronic social insurance provided by the embodiments of the present application.

### Detailed Description

The following will clearly and completely describe the technical solutions in the embodiments of the present application with reference to the drawings in the embodiments of the present application. Apparently, the described embodiments represent only some and not all of the embodiments of the present application. Based on the embodiments in the present application, all other embodiments that are obtained by one of ordinary skill in the art belong to the scope of protection of the present application.

In the embodiments of the present application, in order to meet the needs of users in a process of cross-border transactions, first of all, a variety of relatively high quality logistics plans (as compared to ordinary logistics plans) can be provided to the users. For example, they may include a plan to provide a shorter delivery time through a relatively high-quality logistics route (for example, "ten days arrived" from China to a country such as Spain, etc.), or a plan to support "cash on delivery", etc. Specifically, personalized logistics plans can be provided according to general characteristics of buyers in specific countries or regions with respect to logistics needs, as well as characteristics of logistics service providers in specific countries or regions. For example, for some countries in Europe, many buyers may concern much about the timeliness of delivery. In addition, these countries also have high-quality logistics service providers. Therefore, users in these countries or regions can be provided with logistics plans with shorter delivery times. As another example, for some countries in the Middle East, users have a higher demand for "cash on delivery" because most of them are societies using cash. Therefore, "cash on delivery" logistics plans can be provided to users in these countries. Apparently, in practical applications, more types of logistics plans can be provided according to specific condition(s), and even multiple types of logistics plans can be provided to users in the same country or region for selection, etc.

However, whether it is shorter delivery time or cash on delivery or other high-quality logistics plans, this would imply an increase in logistics costs. For example, if a shorter delivery time is needed to be supported, logistics routes such as air freight, etc., are usually needed, and a selection for a better logistics service provider, for example, is also needed. These all will lead to a higher cost. If cash on delivery is needed to be supported, a system also needs to select a logistics service provider for cooperation in these countries in advance, and to pay an additional commission to such logistics service provider for the service of collecting money as the logistics service provider is required to help the system to collect payment when the goods are delivered to the door. This will lead to an increase in logistics costs, for example.

In view of the above situation, in order to enable users in a cross-border e-commerce system to enjoy the services provided by various higher-quality logistics plans as described above, the system can also provide the users with logistics combined-order services. For example, by combining multiple products in multiple stores into the same transaction order and using the same logistics plan for delivery, multiple logistics packages can be combined into a single logistics package. In addition, it is also possible to share the logistics cost generated by multiple merchants equally or according to the proportions of the prices of respective goods, etc., so as to further reduce the corresponding logistics cost borne by each merchant. As such, both the buyer and the merchant bear the logistics cost, which can be more effectively controlled within the user's tolerance range. At the same time, the buyer can enjoy the services provided by this high-quality logistics plan.

In addition, in an optional implementation, it is also possible to set certain condition(s) for using "free shipping" for specific logistics plans, for example, the total price of product objects in a same transaction order reaching a certain value, or a number of sellers being involved in a same transaction order, etc. In other words, by increasing the total amount of product objects included in the same transaction order or the number of sellers, a user can enjoy a high-quality logistics service for free, which is further conducive to improving the system's rate of conversion from browsing to transaction.

In order to obtain the logistics order service provided by the system, a buyer can first add selected product objects to a collection such as a "shopping cart" when purchasing specific product objects, and then select multiple product objects that support a specific logistics plans to place an order together in a page corresponding to this collection.

However, in practical implementations, in general, not all product objects support the above-mentioned high-quality logistics plans. For example, in practical applications, the system can first select product objects (for example, product objects with relatively high unit prices, etc.) or sellers, etc., and then conduct "inviting merchants" to the corresponding sellers, allowing the sellers to decide whether to participate in a specific logistics plan, and to specify which product object(s) to participate in the specific logistics plan if participating. The system can then add an identification of the specific supported logistics plan to the product objects specified by the specific sellers, etc.

Due to the existence of the above situation, the product objects added by the user to the collection such as the "shopping cart may not only include product objects that can support a specific target logistics plan (the aforementioned high-quality logistics plan), but also include those product objects that do not support the target logistics plan. In conventional solutions, when displaying a page such as a "shopping cart", etc., ordering is usually performed according to an order in which the product objects are added to the collection and/or associated store objects, etc., which causes different product objects that can support the target logistics plan to be scattered in different locations on the page. The product objects that were added to the collection earlier, though supporting the target logistics plan, may be forgotten or missed when the user places an order because they may be seen by the user after sliding multiple screens or pages. This may thus lead to a situation that the selected product objects do not satisfy the condition(s) set by the target logistics plan (for example, the total price is not enough, or the number of sellers involved is not enough, etc.), so that the user cannot enjoy the target the services provided by the logistics plan.

Accordingly, in the embodiments of the present application, when it is necessary to display a page of collection of data objects such as a "shopping cart", the data objects in the collection can be determined first. At least one target data object that meets a certain target logistics plan is selected, and aggregated into the same area on the page for display. In this way, it facilitates a user to select product objects that support the same target logistics plan when placing an order, and avoids situations such as missing a selection, etc., which is more conducive to achieving the condition(s) set by the target logistics plan, improving a conversion rate, and reducing a waste of resources.

In addition, in specific implementations, while displaying the product objects that support the same target logistics plan, it is also possible to convey information such as the identification of the target logistics plan, the benefit information that can be brought to the user using the target logistics plan (for example, a shorter delivery time, cash on delivery, etc.), etc., to the user more intuitively. In addition, a determination can also be made as to whether the product objects currently supporting the target logistics plan in the collection satisfy corresponding condition(s), and a result of determination is provided. If not satisfied, corresponding operation options may also be provided, and the user may be prompted to add more product objects that support the target logistics plan to the collection, so as to obtain a better service provided by the target logistics plan, for example.

Moreover, since the above method of the embodiments of the present application changes the traditional methods of information arrangement, in order to meet the browsing needs of some users for traditional pages, multiple different tab options can also be provided on the pages corresponding to specific collections, which may include, for example, a first tab option corresponding to a traditional display method sorted by time and/or store, and a second tab option corresponding to an aggregated display method according to the support of the target logistics plan. The user can switch between tab options according to specific needs.

Since there may be many kinds of actual target logistics plans, and target logistics plans associated (supported or required) in different countries or regions may be different, the embodiments of the present application can therefore also realize dynamic handling for different countries or regions where users are located. Specifically, an associated target logistics plan can be determined according to a country or region where a user is located, and then target data objects supporting the target logistics plan can be selected from a specific collection for aggregated display. In other words, in an event of providing multiple different display plans through different tab pages, the second tab option that is provided may be different for users in different countries or regions (corresponding to different target logistics plans). If the same country or region is associated with multiple different target logistics plans, a plurality of different second tab options corresponding to different target logistics plans can also be provided on the same page. In each tab page, target product objects that support their corresponding target logistics plan are aggregated and displayed.

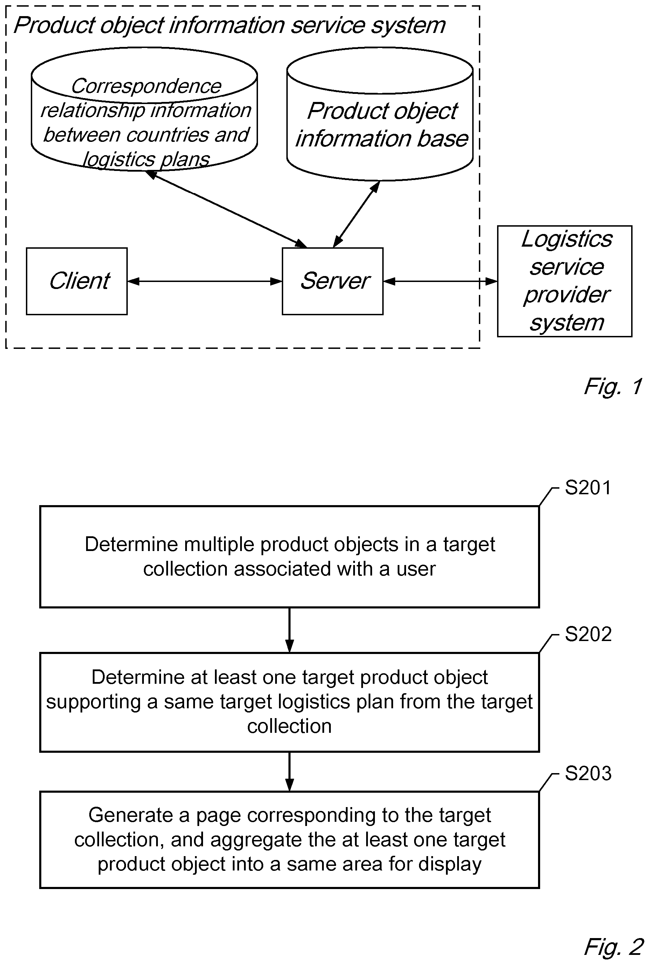

Specifically, from the perspective of system architecture, referring to FIG. 1, the embodiments of the present application may involve a client and a server of a product object information service system. The client is mainly used to interact with a user, and the server can mainly determine product objects in a target collection associated with the user based on information (including support situations of product objects for specific logistics plans) in an information base, and perform processing, such as aggregating, etc., for target product objects that support a same target logistics plan. A generated page can be provided to the client for display. Alternatively, specific target product objects and corresponding target logistics plan information may also be provided to the client, and the client generates a specific page for display, etc. In one case, the server can also pre-store corresponding relationship information between specific countries/regions and supported logistics plans, so as to determine specific target logistics plan(s) that is/are required according to a country/region where a specific buyer is located, and then determine product objects supporting such target logistics plan(s) from a collection. In addition, the server can also interact with a logistics service provider system, which includes estimating a delivery time and a logistics cost, etc. Specific estimation result information can be displayed to the user through a specific page.

A specific technical solution provided by the embodiments of the present application will be described in detail below.

### First Embodiment

The first embodiment firstly provides a method for processing product object information from the perspective of a server. As shown in FIG. 2, the method may specifically include:

S201: Determine multiple product objects in a target collection associated with a user.

There may be a variety of target collections, which may include, for example, a collection waiting for payment such as the user's "shopping cart", or may also include a favorite or a collection of product objects concerned by the user, etc. When the user needs to view a specific collection, a specific request can be submitted to the server. At this time, the server can determine which product objects are included in the collection associated with the user for subsequent determination steps.

S202: Determine at least one target product object supporting a same target logistics plan from the target collection.

After multiple product objects in the target collection are determined, it is possible to determine respective supports of the product objects to a target logistics plan. The target logistics plan may be a logistics plan that provides a better logistics service by combining orders, for example, a ten days arrived or a cash on delivery in a cross-border scenario, etc. In practical implementations, since different countries or regions support specific logistics plans differently, users in specific countries or regions have different needs for specific logistics plans. Therefore, in practical applications, different countries or regions can correspond to different target logistics plans. In this case, it is also possible to first determine a country or region where a user is located, and then determine a target logistics plan that can be provided to the current user according to logistics plans associated with the country or region. For example, if a buyer is a Spanish user, and a target logistics plan supported by Spain is "ten days arrived", then at least one target product object that supports the "ten days arrived" logistics plan can be selected from a target collection. Alternatively, if a target logistics plan supported by a country in the Middle East is "cash on delivery", at least one target product object that supports the "cash on delivery" logistics plan can then be selected from a target collection, etc., for a buyer in this country.

A support status of a product object to a target logistics plan may be determined according to a pre-added identification for the product object, for example. For example, in practical implementations, after proposing a certain target logistics plan, the platform side can select product objects or merchants, and then initiate invitations to the merchants to join specific activities, and can sign relevant agreements (including a logistics cost allocation method, etc.). If a merchant confirms his/her participation, he/she can also select associated product objects thereof. Correspondingly, the platform side can add an identification of the corresponding target logistics plan to product objects specified by the participating merchant. In this way, a relevant field can be added in the product object information database for recording the identification of the target logistics plan supported by the corresponding product object. For example, in one method, information about the identification of the target logistics plan stored in the specific product object information database may be as shown in Table 1:

**Table 1**

| Product object ID | Supported target logistics plan |
|---|---|
| 1000001 | ten days arrived |
| 1000002 | - |
| 1000003 | cash on delivery |
| ...... | ...... |

In this way, after determining a plurality of product objects associated in the target collection, a determination can be made as to whether the product objects supports a certain target logistics plan by querying a specific product object information database or the like.

S203: Generate a page corresponding to the target collection, and aggregate the at least one target product object into a same area for display.

After at least one product object supporting a certain target logistics plan is determined, a page corresponding to the target collection can be generated, and the at least one target product object can be aggregated into the same area for display. In specific implementations, the same area may be in the page, that is, the at least one target product object may be directly aggregated into the same area for display. Alternatively, in another case, especially when the number of target product objects is relatively large, it is also possible to provide an operation object on the page according to the identification of the same target logistics plan, provide a floating layer in response to an operation request for the operation object, and aggregate the at least one target product object into the floating layer for display, etc.

For example, if the target logistics plan supported by the current user's country or region is "10-Day Arrived", there are currently 10 product objects in his/her "Shopping Cart", and three of them support the "10-Day Arrived" target logistics plan. Then, in the embodiments of the present application, these three product objects can be aggregated into the same area for display. In this way, it is convenient for the user to select a plurality of different product objects supporting the same target logistics plan from the target collection. In the same order, the more product objects that support the same target logistics plan are selected by the user, the more conducive to logistics cost control and resource saving. For example, for different product objects that support the same target logistics plan, the system can perform "logistics order consolidation" for the user by default, thereby reducing the logistics cost. Specifically, it is possible to first collect product objects scattered at different domestic sellers into a certain "collection warehouse", and then pack multiple products into the same logistics package from the "collection warehouse", which is transported to a destination country or region through air freight, etc., and is then delivered to the user's home or other designated receiving location through a cooperated logistics service that is local to the target country or region.

In this way, on the one hand, the use of high-quality logistics resources associated with the target logistics plan can be realized, and on the other hand, the logistics cost can also be reduced (when multiple product objects are packaged into the same logistics package, they can correspond to the same logistics order, and the total logistics cost will be significantly reduced as compared to multiple logistics packages correspond to multiple logistics orders). Whether the logistics cost after receiving is borne by the buyer or the seller, it is easier to be controlled within the acceptable range of the user. Even in practical implementations, condition(s) for "free shipping" can also be set. For example, if the number of product objects supporting a certain target logistics plan in the same order reaches a certain amount, or the total price attribute reaches a certain value, you can get the high-quality logistics service provided by the target logistics plan for free. However, in the embodiments of the present application, since a plurality of different product objects supporting the same target logistics plan can be aggregated into the same area for display, this prevents a product object from not being selected by the user due to its position being relatively close to the last in the collection. This can thus make the order content to satisfy the condition(s) corresponding to the specific target logistics plan. Apparently, in practical implementations, it is also possible to determine a situation of the product objects that are currently included in the collection and support the same target logistics plan, and determine whether they satisfy the condition(s) corresponding to the target logistics plan. If not satisfied, operation options such as "adding more to an order" can also be provided to guide the user to add more product objects that support the target logistics plan to the collection, in order to help the user to obtain the high-quality logistics service provided by the target logistics plan (this will be described in detail hereinafter), etc.

In specific implementations, since the above method of the embodiments of the present application changes the traditional information arrangement methods (in a traditional method, product objects in a collection are sorted according to an order in which the product objects are added to the collection and stores to which they belong, etc.), and some users may be more accustomed to operating in the traditional manner, a plurality of different tab options may also be provided on pages corresponding to specific target collections in order to meet the browsing needs of some users for traditional pages. For example, they may include a first tab option corresponding to a traditional display method sorted by times of adding product objects and/or stores to which product objects belong, and a second tab option corresponding to an aggregate display method based on a support for the target logistics plan. In this way, the way of displaying according to the method provided by the embodiments of the present application becomes an option. One of the tab pages can be displayed by default, and at the same time, the user can switch between the tab options according to specific needs to view content of other tabs, etc.

In other words, in specific implementations, the first tab option and the second tab option can be provided on the page. The second tab option corresponds to the target logistics plan. When displaying a tab page corresponding to the second tab option, the at least one target product object may be aggregated into a first area of the tab page for display. There can be various positions of the first area. For example, in order to be more intuitive, the uppermost position in the specific tab page can be used as the first area, that is, the user who browses the tab page can see information of the plurality of product objects supporting the same target logistics plan.

Apparently, if the collection includes other product objects other than the target product objects, these other product objects can be displayed in a second area of the tab page, and prompt information can be provided at a junction position between the first area and the second area.

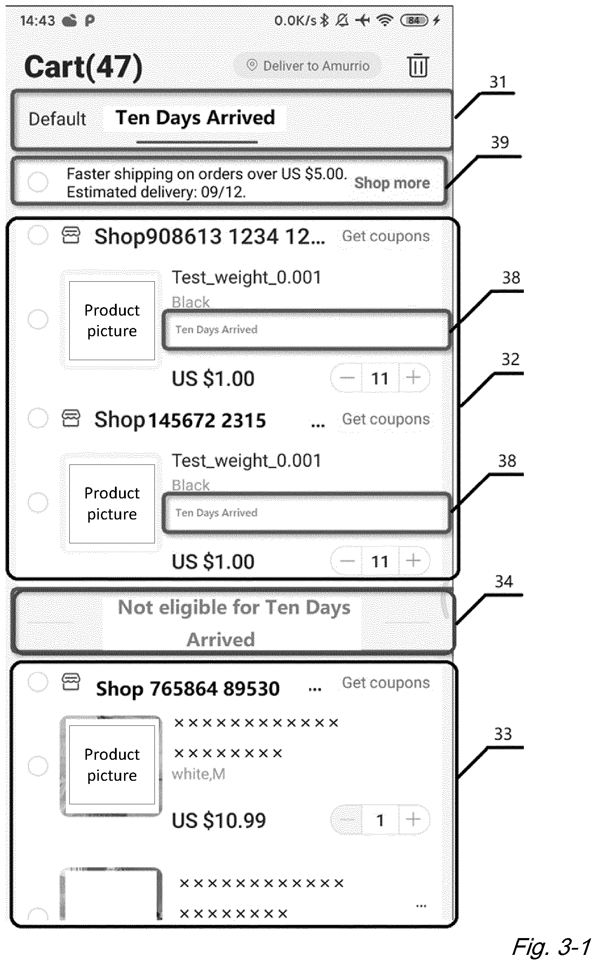

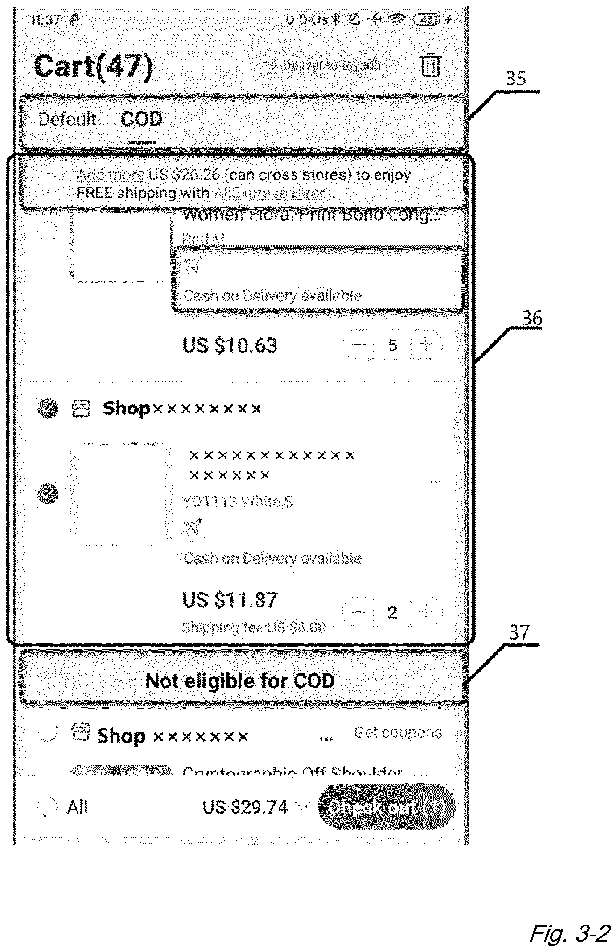

For example, if the currently determined target logistics plan is "Ten Days Arrived", two tab options: "Default" and "Ten Days Arrived" (the name of the second tab option can also correspond to the name of the specific target logistics plan) as shown at a place 31 in FIG. 3-1 can be provided in the corresponding page. In the tab page corresponding to the "Default" tab option, product objects can be sorted and displayed according to a chronological order of being added to a "shopping cart" and/or store objects to which they belong. In the tab page corresponding to the "Ten Days Arrived" tab option, multiple product objects supporting the "Ten Days Arrived" logistics plan can be aggregated and displayed in a first area 32 as shown in FIG. 3-1. Other product objects can be displayed in a second area 33 (product object information in the second area is not fully shown). A dividing line shown at 34 can be used to separate the first area and the second area, and "Not eligible for Ten Days Arrived" can also be displayed on the dividing line, i.e., a prompt that "the following products do not support `Ten Days Arrived'" is shown, etc. It needs to be noted that since the embodiments of the present application usually involve cross-border scenarios, information displayed on the specific page can be expressed according to the official language of the country/region where the specific user is located. For example, in the examples shown in FIG. 3-1 and FIG. 3-2, it is mainly expressed in English because the page needs to be displayed to users in English-speaking countries. If it needs to be displayed to users in countries of other languages, page content corresponding to the other languages can also be provided, and examples will not be listed one by one herein.

As another example, if the currently determined target logistics plan is "cash on delivery", two tab options: "Default" and "COD" ("Cash on Delivery") as shown at a place 35 in FIG. 3-2 can be provided on the page corresponding to the target collection (such as "shopping cart"). In the tab page corresponding to the "COD" tab option, multiple product objects supporting the "COD" logistics plan can be aggregated and displayed in a first area 36. Other product objects can be displayed in a second area (product object information in the second area is not completely shown), and these two areas can also be separated by a dividing line 37, for example.

As can be seen, in the embodiments of the present application, a delivery of page data can be performed dynamically according to different target logistics plans supported by a country where a specific buyer is located. In this way, even if contents of product objects added to respective "shopping cart" by two users are exactly the same, these two users may see different tab options on respective "shopping cart" pages because they are located in different countries or regions, which are used to provide aggregation information of product objects corresponding to different target logistics plans.

In addition, in practical implementations, the same country may support a plurality of different target logistics plans. For example, a certain country or region supports both "Ten Days Arrived" and "Cash on Delivery", etc. At this time, multiple second tab options corresponding to different target logistics plans may be respectively provided on the page. In other words, multiple product objects that support corresponding target logistics plans can be separately aggregated and displayed in multiple different tab pages. For example, a user's "shopping cart" includes 10 product objects, among which A, B, and C support "Ten Days Arrived", B, D, and E support "Cash on Delivery", and the country where the user is located also supports "Ten Days Arrived" and "Cash on Delivery" plans. As such, the user's "shopping cart" page can include three tab options, one of which is a tab option in a default state, and 10 product objects can be sorted according to an order of being added to the "shopping cart" in its corresponding tab page. The other two tab options correspond to "Ten Days Arrived" and "Cash on Delivery" respectively. In a tab page corresponding to "Ten Days Arrived", product objects A, B, and C can be aggregated into a same area for display, and in a tab page corresponding to "Cash on Delivery", product objects B, D, and E can be aggregated into a same area for display, etc.

Furthermore, the specific target logistics plan may also be a target logistics plan selected by the user in advance from multiple selectable logistics plans. In other words, in practical implementations, if the user's country can support multiple different logistics plans, the user can also choose which logistics plan to use. A result of such selection can be stored in the user's configuration information. When displaying the target collection associated with the user, the target logistics plan selected by the user can be determined according to the configuration information associated with the user, and multiple product objects that support the target logistics plan and subsequent aggregated display processing can then be determined.

In specific implementations, labeling information about the target logistics plan supported by the at least one target product object can also be provided in the same area, that is, information of the target logistics plan corresponding to a specific aggregation result is more intuitively provided to the user. For example, as shown at a place 38 in FIG. 3-1, information of the "Ten Days Arrived" logistics plan supported by specific product objects can be displayed more intuitively.

Furthermore, benefit information that can be obtained by using the target logistics plan can also be provided in the same area. For example, for logistics plans such as "Ten Days Arrived", information such as an estimated delivery time can be displayed in the area where aggregated information is located. For example, as shown in FIG. 3-1, logistics timeliness information such as "Estimated delivery: 09/12" (i.e., an expected delivery on September 12) can be displayed at a place 39.

If the target logistics plan is associated with conditional information, the conditional information and prompt information of whether the at least one target product object currently included in the collection satisfies the condition(s) may also be provided in the same area. In addition, if the at least one target product object currently included in the collection does not satisfy the condition(s), an operation option for adding other product objects that support the target logistics plan to the collection to meet the condition(s) may also be provided. For example, the "Ten Days Arrived" logistics plan can only be used when the amount of order reaches 50 US dollars, or enjoy the services of "Ten Days Arrived" and "free shipping", etc. However, if the total amount of product objects supporting the logistics plan in the user's current "shopping cart" is $30, the user may be prompted to purchase another $20 of product objects, and a specific "adding more to an order" portal, etc., may be provided. At this time, after the user performs an operation such as clicking through the portal, the user can also be provided with information about more product objects that support the "Ten Days Arrived" plan, and the user can add to the "shopping cart" after selection. Since the product objects newly added to the "shopping cart" also support the "Ten Days Arrived" plan, they can also be aggregated and displayed in the same area with other product objects that support this plan, which is convenient for the user to choose when placing an order.

Apparently, the following situations may also exist in practical implementations: a product object supports a certain target logistics plan and so is aggregated and displayed with other product objects that support the logistics plan. If the user places an order for these product objects supporting the logistics plan directly on the page, the corresponding target logistics plan will be used for delivery by default (if the target logistics plan has corresponding use conditional information, the target logistics plan will be used for delivery if corresponding condition(s) is/are satisfied). However, there may be some special product objects, and the user wants to use other logistics plans. For example, although a certain product object supports "cash on delivery", the current user may not want to use the "cash on delivery" plan for this product object for various reasons. Therefore, in an optional implementation, an operation option for modifying a logistics plan of the target product object may also be provided on the page, wherein different target product objects may correspond to different operation options, which are used to modify corresponding target product objects to other logistics plans.

After receiving a request for generating a transaction order, if there are multiple target product objects included in the request, the multiple target product objects may be combined into the same transaction order. When generating a logistics order based on the transaction order, since multiple target product objects may correspond to different stores, they may be scattered in different places in the country, though their delivery warehouses are all in the country. Therefore, in order to facilitate the logistics order, the specific target logistics plan may include a first logistics stage and a second logistics stage. In the first logistics stage, information of destination of collection of goods can be determined, and the information of destination collection of goods can be provided to dispatchers associated with the multiple targets product objects. Therefore, the specific merchants, etc., can generate their corresponding first logistics orders according to respective logistics service providers that they cooperate with, so as to transport the target product objects to the warehouse. After the multiple target product objects arrive at the destination of collection, they enter into the second logistics stage. At this time, a second logistics order can be generated according to a logistics service provider predetermined in the system, and the associated logistics service provider uses a predetermined logistics resource (for example, an air freight resource, etc.), to combine and deliver the multiple target product objects to a delivery address associated with the user (for example, an address in a foreign country). Each of the first logistics order and the second logistics order may be delivered by the same logistics service provider, or may correspond to a different logistics service provider, which may be determined according to an actual situation.

In short, through the embodiments of the present application, it is possible to determine respective supports of product objects in a target collection to a target logistics plan, and aggregate at least one product object supporting the same target logistics plan into a same area on a page corresponding to the target collection for display. In this way, it is convenient for a user to select at least one product object that supports the same target logistics plan, and avoids a situation that some product objects that support the target logistics plan are missed and not selected due to reasons such as adding to the target collection relatively early, thereby helping the user to better enjoy a higher-quality logistics service proposed by the target logistics plan.

In practical implementations, a target logistics plan can be associated with conditional information, and the specific conditional information can be set through information such as the number of stores associated with product objects supporting the target logistics plan in a same transaction order, or an attribute value associated with a total price, etc. In this way, by aggregating and displaying multiple product objects that support the same target logistics plan, it is also easy to satisfy corresponding condition(s) of the target logistics plan while avoiding a user's missed selection. This thereby facilitates a logistics cost control to be performed, and achieves purposes, such as reducing a waste of resources, etc., while providing the user with a logistics service through a better logistics plan at the same time.

### Second Embodiment

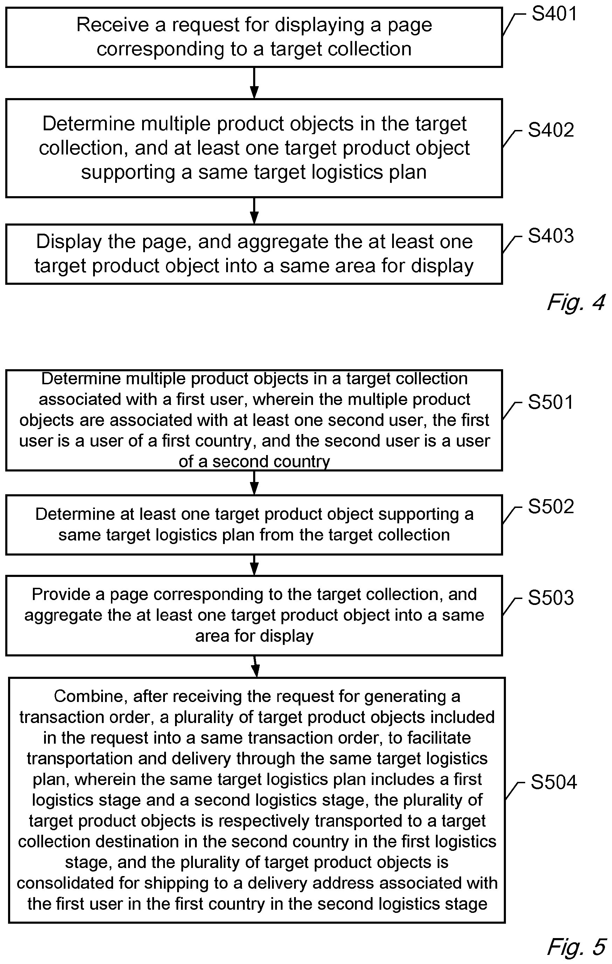

The second embodiment corresponds to the first embodiment. From the perspective of a client, a method for processing product object information is provided. Referring to FIG. 4, the method may include:

S401: Receive a request for displaying a page corresponding to a target collection.

S402: Determine multiple product objects in the target collection, and at least one target product object supporting a same target logistics plan.

In specific implementations, the request can be submitted to a server. The server determines multiple product objects in the target collection and the at least one target product object supporting the same target logistics plan, and returns this information to the client. Alternatively, this step can also be done by the client.

S403: Display the page, and aggregate the at least one target product object into a same area for display.

Specifically, the at least one target product object may be aggregated into the same area of the page for display. Alternatively, an operation object with an identification of the same target logistics plan may also be provided on the page. After the operation object is being operated, by popping up a floating layer or the like, the at least one target product object is aggregated to the floating layer for display, etc.

### Third Embodiment

The third embodiment provides a page. The page is used to display information of multiple product objects in a target collection associated with a user, wherein the page includes a first area, and the first area is used to display an aggregated display of at least one target product object that supports a same target logistics plan in the target collection.

In addition, the page may further include a second area for displaying product objects other than the target product objects in the target collection.

In specific implementations, the page may also include a first tab option and a second tab option, wherein the second tab option corresponds to the target logistics plan, and wherein the first area is located in a tab page corresponding to the second tab option.

Specifically, a tab page corresponding to the first tab option is used to sort and display product objects in the target collection according to a chronological order in which the product objects are added to the target collection and/or information of store objects to which they belong.

There may be multiple second tab options corresponding to different target logistics plans.

### Fourth Embodiment

The fourth embodiment provides a method for processing product objects for applications in cross-border scenarios. Specifically, referring to FIG. 5, the method may include:

S501: Determine multiple product objects in a target collection associated with a first user, wherein the multiple product objects are associated with at least one second user, the first user is a user of a first country, and the second user is a user of a second country.

S502: Determine at least one target product object supporting a same target logistics plan from the target collection.

S503: Provide a page corresponding to the target collection, and aggregate the at least one target product object into a same area for display.

S504: Combine, after receiving the request for generating a transaction order, a plurality of target product objects included in the request into a same transaction order, to facilitate transportation and delivery through the same target logistics plan, wherein the same target logistics plan includes a first logistics stage and a second logistics stage, the plurality of target product objects is respectively transported to a target collection destination in the second country in the first logistics stage, and the plurality of target product objects is consolidated for shipping to a delivery address associated with the first user in the first country in the second logistics stage.

Specifically, in the second logistics stage, the plurality of target product objects can be combined and delivered to a delivery address associated with the first user in the first country through a pre-designated logistics service provider and a designated logistics resource.

It needs to be noted that the embodiments of the present application may involve the use of user data. In practical applications, user-specific personal data can be used, in compliance with applicable laws and regulations of the country where it is located (for example, the user expressly agrees, or the user is actually notified, etc.), in the solutions described in this specification to the extent permitted by the applicable laws and regulations.

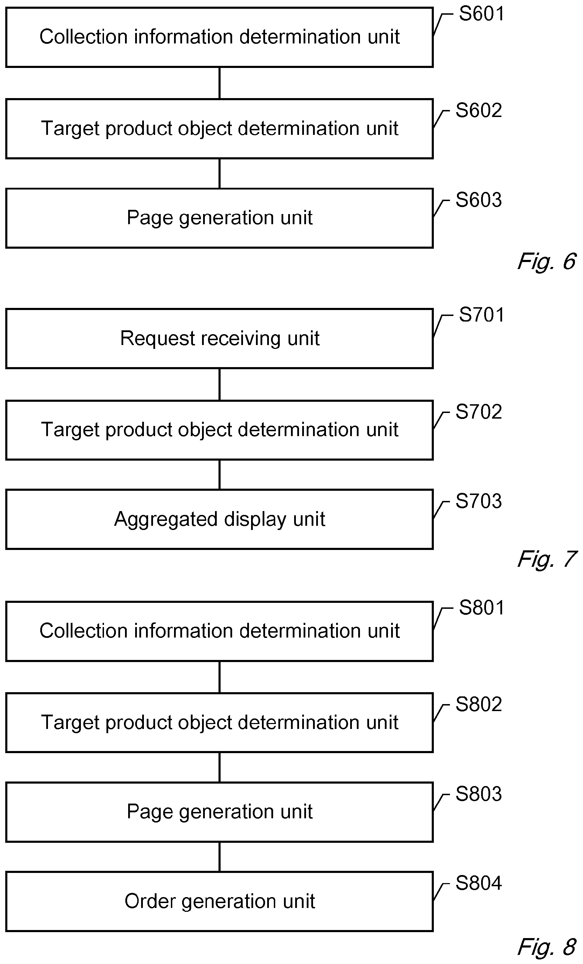

Corresponding to the first embodiment, this embodiment of the present application also provides an apparatus for processing product objects. Referring to FIG. 6, the apparatus may include:
a collection information determination unit 601 configured to determine multiple product objects in a target collection associated with a user;
a target product object determination unit 602 configured to determine at least one target product object that supports a same target logistics plan from the target collection;
a page generation unit 603 configured to generate a page corresponding to the target collection, and aggregate the at least one target product object into a same area for display.

The target logistics plan includes a target logistics plan in a cross-border logistics scenario.

At this time, the apparatus may also include:
a country-related information determination unit configured to determine target logistics plans associated with a target country where the user is located.

The target product object determination unit may be specifically configured to: determine the at least one target product object that supports the target logistics plan associated with the country from the collection.

Specifically, the page generation unit can be specifically configured to:
aggregate the at least one target product object into the same area of the page for display.

Specifically, the page generation unit may specifically include:
a tab option providing subunit configured to provide a first tab option and a second tab option on the page, wherein the first tab option corresponds to a default product object sorting method, and the second tab option corresponds to the corresponding to the target logistics plan, and the default product object sorting method includes: sorting according to an order in which the product objects are added to the target collection and/or store objects to which the product objects belong;
an aggregated display subunit configured to aggregate, when displaying a tab page corresponding to the second tab option, the at least one target product object into a first area of the tab page for display.

The apparatus may further include:
a prompting unit configured to display, if the collection includes other product objects different from the target product objects, the other product objects in a second area of the tab page, and provide prompt information at a junction between the first area and the second area.

If the target logistics plan includes multiple target logistics plans, the tab option providing subunit may be specifically configured to provide multiple second tab options corresponding to different target logistics plans on the page.

Additionally, the page generation unit may specifically include:
an operation object providing subunit configured to provide an operation object on the page according to an identification of the same target logistics plan;
a floating layer providing subunit configured to provide a floating layer in response to an operation request on the operation object, and aggregate the at least one target product object into the floating layer for display.

Additionally, the apparatus may further include:
a logistics plan tab providing unit configured to provide label information about the target logistics plan supported by the at least one target product object in the same area.

Additionally, in specific implementations, the target logistics plan is associated with information of condition(s);

At this time, the apparatus may further include:
a conditional information providing unit configured to provide the information of the condition(s) in the same area, and prompt information indicating whether the at least one target product object currently included in the collection satisfies the condition(s).

The apparatus may further include:
an operation option providing unit configured to, if the at least one target product object currently included in the collection does not satisfy the condition(s), provide an operation option for adding other product objects that support the target logistics plan to the collection to satisfy the condition(s); and
an adding unit configured to add a product object newly added to the target collection and supports the target logistics plan to the same area for display.

Additionally, the apparatus may further include:
a modification operation option providing unit configured to provide an operation option for modifying the logistics plan of the target product objects in the same area, so as to modify the corresponding target product objects to another logistics plan.

The same target logistics plan includes: a target logistics plan selected by the user in advance from multiple selectable logistics plans.

Additionally, the apparatus may further include:
a transaction order generation unit configured to combine, after receiving a request for generating a transaction order, a plurality of target product objects into a same transaction order if the plurality of target product objects is included in the request;
a goods collection destination information providing unit configured to determine information of destination of collection of goods in the first logistics stage according to the target logistics plan, and provide the information of destination of collection of goods to dispatchers associated with the plurality of target product objects;
a logistics order generation unit configured to generate a logistics order for the second logistics stage after the plurality of target product objects arrives at the destination of collection, to allow a logistics service provider designated in advance to use a designated logistics resource to combine and deliver the plurality of target product objects to a delivery address associated with the user.

Corresponding to the second embodiment, this embodiment of the present application also provides an apparatus for processing product object information. Referring to FIG. 7, the apparatus may include:
a request receiving unit 701 configured to receive a request for displaying a page corresponding to a target collection;
a target product object determination unit 702 configured to determine multiple product objects in the target collection, and at least one target product object supporting a same target logistics plan; and
an aggregated display unit 703 configured to display the page, and aggregate the at least one target product object into a same area for display.

Corresponding to the fourth embodiment, this embodiment of the present application also provides an apparatus for processing product objects. Referring to FIG. 8, the apparatus may include:
a collection information determination unit 801 configured to determine multiple product objects in a target collection associated with a first user, wherein the multiple product objects are associated with at least one second user, and the first user is a user of a first country, the second user is a user of a second country;
a target product object determination unit 802 configured to determine at least one target product object that supports a same target logistics plan from the target collection;
a page generation unit 803 configured to generate a page corresponding to the target collection, and aggregate the at least one target product object into a same area for display; and
an order generation unit 804 configured to combine, after receiving a request for generating a transaction order, a plurality of target product objects included in the request into a same transaction order, to facilitate transportation and delivery through the same target logistics plan, wherein the same target logistics plan includes a first logistics stage and a second logistics stage, the plurality of target product objects is respectively transported to a target collection destination in the second country in the first logistics stage, and the plurality of target product objects is consolidated for shipping to a delivery address associated with the first user in the first country in the second logistics stage.

In the second logistics stage, the plurality of target product objects is combined and delivered to the delivery address associated with the first user in the first country through a pre-designated logistics service provider and a designated logistics resource.

In addition, the embodiments of the present application also provide a computer-readable storage medium, on which a computer program is stored, and the program, when executed by a processor, implements the steps of the method described in any one of the foregoing method embodiments.

Furthermore, an electronic device includes:
one or more processors; and
a memory associated with the one or more processors, the memory being used to store program instructions, wherein the program instructions, when read and executed by the one or more processors, perform the steps of the method of any one of the foregoing method embodiments.

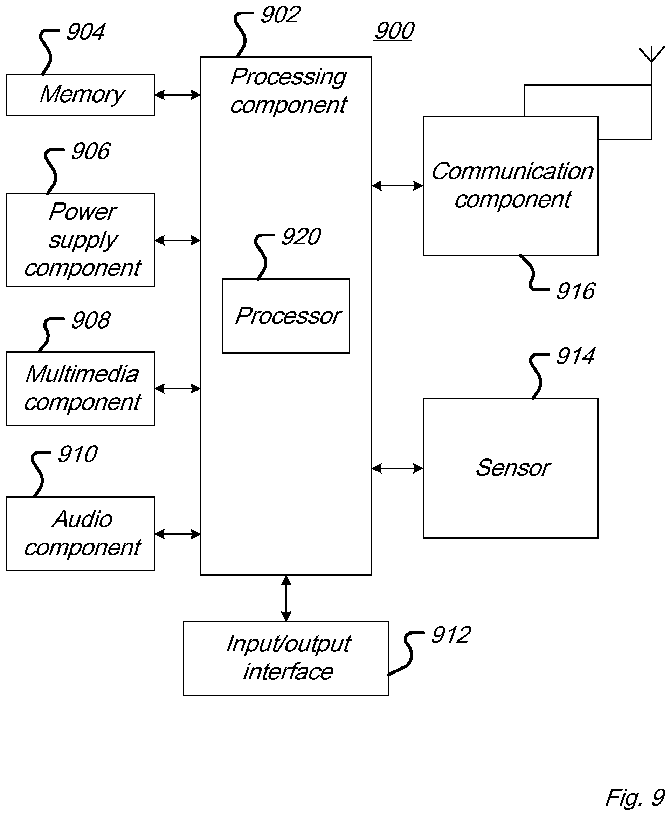

FIG. 9 exemplarily shows the architecture of an electronic device. For example, the device 900 may be a mobile phone, a computer, a digital broadcast terminal, a messaging device, a game console, a tablet device, a medical device, a fitness device, a personal digital assistant, aircraft, etc.

Referring to FIG. 9, the device 900 may include one or more of the following components: a processing component 902, a memory 904, a power supply component 906, a multimedia component 908, an audio component 910, an input/output (I/O) interface 912, a sensor component 914, and a communication component 916.

The processing component 902 generally controls overall operations of the device 900, such as operations related to display, telephone calls, data communications, camera operations, and recording operations. The processing component 902 may include one or more processors 920 to execute instructions to complete all or part of the steps of the methods provided by the technical solutions of the present disclosure. Additionally, the processing component 902 may include one or more modules that facilitate interactions between the processing component 902 and other components. For example, the processing component 902 may include a multimedia module to facilitate interactions between the multimedia component 908 and the processing component 902.

The memory 904 is configured to store various types of data to support operations at the device 900. Examples of such data include instructions for any application or method operating on the device 900, contact data, phonebook data, messages, pictures, videos, and the like. The memory 904 can be implemented by any type of volatile or non-volatile storage device or a combination thereof, such as static random access memory (SRAM), electrically erasable programmable read-only memory (EEPROM), erasable programmable read only memory (EPROM), programmable read only memory (PROM), read only memory (ROM), magnetic memory, flash memory, magnetic disk or optical disk.

The power supply component 906 provides power to various components of the device 900. The power supply component 906 may include a power management system, one or more power supplies, and other components associated with generating, managing, and distributing power for the device 900.

The multimedia component 908 includes a screen that provides an output interface between the device 900 and a user. In some embodiments, the screen may include a liquid crystal display (LCD) or a touch panel (TP). If the screen includes a touch panel, the screen may be implemented as a touch screen to receive input signals from the user. The touch panel includes one or more touch sensors to sense touches, swipes, and gestures on the touch panel. The touch sensor may not only sense a boundary of a touch or a swipe action, but also detect duration and pressure associated with the touch or swipe operation. In some embodiments, the multimedia component 908 includes a front camera and/or a rear camera. When the device 900 is in an operation mode, such as a shooting mode or a video mode, the front camera and/or the rear camera can receive external multimedia data. Each of the front camera and the rear camera can be a fixed optical lens system or have focal length and optical zoom capability.

The audio component 910 is configured to output and/or input audio signals. For example, the audio component 910 includes a microphone (MIC), which is configured to receive external audio signals when the device 900 is in an operation mode, such as a call mode, a recording mode, and a voice recognition mode. The received audio signals may further be stored in the memory 904 or sent via the communication component 916. In some embodiments, the audio component 910 also includes a speaker for outputting audio signals.

The I/O interface 912 provides an interface between the processing component 902 and a peripheral interface module. The peripheral interface module may be a keyboard, a click wheel, a button, and the like. These buttons may include, but are not limited to: a home button, a volume button, a start button, and a lock button.

The sensor component 914 includes one or more sensors for providing state assessments of various aspects of the device 900. For example, the sensor component 914 can detect an open/closed state of the device 900, relative positioning of components, such as a display and a keypad of the device 900. The sensor component 914 can also detect a change in a position of the device 900 or a component of the device 900, the presence or absence of user contact with the device 900, an orientation or acceleration/deceleration of the device 900, and a temperature change of the device 900. The sensor component 914 may include a proximity sensor configured to detect the presence of nearby objects in the absence of any physical contact. The sensor component 914 may also include an optical sensor, such as a CMOS or CCD image sensor, for use in imaging applications. In some embodiments, the sensor component 914 may also include an acceleration sensor, a gyroscope sensor, a magnetic sensor, a pressure sensor or a temperature sensor.

The communication component 916 is configured to facilitate wired or wireless communications between the device 900 and other devices. The device 900 can access wireless networks based on communication standards, such as WiFi, or mobile communication networks such as 2G, 3G, 4G/LTE, and 5G. In an exemplary embodiment, the communication component 916 receives a broadcast signal or broadcast related information from an external broadcast management system via a broadcast channel. In an exemplary embodiment, the communication component 916 also includes a near field communication (NFC) module to facilitate short-range communication. For example, the NFC module can be implemented based on Radio Frequency Identification (RFID) technology, Infrared Data Association (IrDA) technology, Ultra Wideband (UWB) technology, Bluetooth (BT) technology, and other technologies.

In an exemplary embodiment, the device 900 may be programmed by one or more application specific integrated circuits (ASICs), digital signal processors (DSPs), digital signal processing devices (DSPDs), programmable logic devices (PLDs), field programmable gate array (FPGA), controllers, microcontrollers, microprocessors, or other electronic components for performing the methods as described above.

In an exemplary embodiment, a non-transitory computer-readable storage medium including instructions is also provided, such as the memory 904 including instructions. The instructions can be executed by the processor 920 of the device 900 to complete the methods provided by the technical solutions of the present disclosure. For example, the non-transitory computer readable storage medium may be ROM, random access memory (RAM), CD-ROM, a magnetic tape, a floppy disk, an optical data storage device, and the like.

As can be known from the above description of the implementations, one skilled in the art can clearly understand that the present application can be implemented by means of software plus a necessary general-purpose hardware platform. Based on such understanding, the essence of the technical solutions of the present application or the arts that contribute to existing technologies can be embodied in a form of a software product. Such computer software product can be stored in a storage medium, such as ROM/RAM, a magnetic disk, an optical disk, etc., and includes a number of instructions to cause a computer device (which may be a personal computer, a server, or a network device, etc.) to execute the methods described in various embodiments or some parts of the embodiments of the present application.

Each embodiment in this specification is described in a progressive manner. The same and similar parts of each embodiment can be referenced to each other. Each embodiment focuses on aspects that are different from other embodiments. In particular, for the systems or the system embodiments, a description thereof is relatively simple due to their similarities to the method embodiments basically, and related parts can be referenced to parts of the description of the method embodiments. The systems and system embodiments described above are only illustrative, and the units described as separate components may or may not be physically separated. The components shown as units may or may not be physical units, i.e., can be located in one place, or can be distributed over multiple network elements. Part or all of the modules can be selected according to actual needs to achieve the purposes of the solutions of the embodiments. It can be understood and implemented by one skilled in the art without making any creative effort.

The processing methods, apparatuses and electronic devices for product objects provided by the present application have been introduced in detail above. In this specification, specific examples are used to illustrate the principles and implementations of the present application. The description of the above embodiments is only used for helping understanding the methods of the present application and their core ideas. At the same time, for one of ordinary skill in the art, there could be changes in specific implementations and application scopes according to the ideas of the present application. In short, the content of this specification should not be understood as limiting the present application.

## Claims

1. A method for processing product objects, comprising:
determining multiple product objects in a target collection associated with a user;
determining at least one target product object that supports a same target logistics plan from the target collection; and
generating a page corresponding to the target collection, and aggregating the at least one target product object into a same area for display.

2. The method of claim 1, wherein:
the target logistics plan comprises a target logistics plan in a cross-border logistics scenario; and
the method further comprises:
determining the target logistics plan associated with a target country where the user is located;
determining the at least one target product object that supports the target logistics plan from the collection includes:
determining the at least one target product object that supports the target logistics plan associated with the country from the collection.

3. The method of claim 1, wherein:
aggregating the at least one target product object in the same area for display comprises:
aggregating the at least one target product object into the same area of the page for display.

4. The method of claim 3, wherein:
generating the page corresponding to the target collection comprises:
providing a first tab option and a second tab option on the page, wherein the first tab option corresponds to a default product object sorting method, and the second tab option corresponds to the target logistics plan; the default product object sorting method comprises: sorting according to an order in which the product objects are added to the target collection and/or store objects to which the product objects belong to;
aggregating, when displaying a tab page corresponding to the second tab option, the at least one target product object into a first area of the tab page for display.

5. The method according to claim 4, further comprising:
if the collection further comprises other product objects other than the target product object, displaying the other product objects in a second area of the tab page, and providing prompt information at a junction between the first area and the second area.

6. The method of claim 4, wherein:
multiple second tab options corresponding to different target logistics plans are provided on the page if the target logistics plan comprises multiple target logistics plans.

7. The method of claim 1, wherein:
aggregating the at least one target product object in the same area for display comprises:
providing an operation object on the page according to an identification of the same target logistics plan; and
providing a floating layer, and aggregating the at least one target product object into the floating layer for display in response to an operation request on the operation object.

8. The method according to claim 1, further comprising:
providing label information about the target logistics plan supported by the at least one target product object in the same area.

9. The method of claim 1, wherein:
the target logistics plan is associated with information of condition(s); and
the method further comprises:
providing the information of the condition(s) and prompt information indicating whether the at least one target product object currently included in the collection satisfies the condition(s) in the same area.

10. The method according to claim 9, further comprising:
providing an operation option for adding other product objects supporting the target logistics plan to the collection to satisfy the condition(s) if the at least one target product object currently included in the collection does not satisfy the condition(s).

11. The method of claim 10, further comprising:
adding a product object newly added to the target collection and supporting the target logistics plan to the same area for display.

12. The method of claim 1, further comprising:
providing an operation option for modifying the logistics plan of the target product object in the same area, so as to modify the target product object to another logistics plan.

13. The method of claim 1, wherein:
the same target logistics plan comprises: a target logistics plan selected by the user in advance from a plurality of selectable logistics plans.

14. The method of claim 1, further comprising:
after receiving a request for generating a transaction order, combining multiple target product objects into the same transaction order if the multiple target product objects are included in the request.

15. The method of claim 14, further comprising:
determining information of destination of collection of goods in a first logistics stage according to the target logistics plan, and providing the information of destination of collection of goods to dispatchers associated with the multiple target product objects; and
generating a logistics order for a second logistics stage after the multiple target product objects arrive at the destination of collection, to allow a pre-designated logistics service provider to use a designated logistics resource to combine and deliver the multiple target product objects for shipping to a delivery address associated with the user.

16. A method for processing product object information, comprising:
receiving a request to display a page corresponding to a target collection;
determining multiple product objects in the target collection, and at least one target product object supporting a same target logistics plan; and
displaying the page, and aggregating the at least one target product object into a same area for display.

17. A page, wherein:
the page is used to display information of multiple product objects in a target collection associated with a user; and
the page includes a first area, and the first area is used to aggregate and display at least one target product object supporting a same target logistics plan in the target collection.

18. The page of claim 17, wherein:
the page further comprises a second area for displaying other product objects in the target collection other than the target product object.

19. The page of claim 17, wherein:
the page comprises a first tab option and a second tab option, wherein the second tab option corresponds to the target logistics plan; and
the first area is located in a tab page corresponding to the second tab option.

20. The page of claim 19, wherein:
a tab page corresponding to the first tab option is used to sort and display the product objects in the target collection according to a chronological order in which the product objects are added to the target collection and/or information of store objects to which the product objects belong.

21. The page of claim 19, wherein:
the second tab option comprises multiple second tab options, the multiple second tab options corresponding to different target logistics plans respectively.

22. A method for processing product objects, comprising:
determining multiple product objects in a target collection associated with a first user, wherein the multiple product objects are associated with at least one second user, the first user is a user of a first country, and the second user is a user of a second country;
determining at least one target product object that supports a same target logistics plan from the target collection;
generating a page corresponding to the target collection, and aggregating the at least one target product object into a same area for display; and
combining, after receiving a request for generating a transaction order, a plurality of target product objects included in the request into a same transaction order, to facilitate transportation and delivery through the same target logistics plan, wherein the same target logistics plan includes a first logistics stage and a second logistics stage, the plurality of target product objects is respectively transported to a target collection destination in the second country in the first logistics stage, and the plurality of target product objects is consolidated for shipping to a delivery address associated with the first user in the first country in the second logistics stage.

23. The method of claim 22, wherein:
the plurality of target product objects is combined and delivered to the delivery address associated with the first user in the first country through a pre-designated logistics service provider and a designated logistics resource in the second logistics stage.

24. An apparatus for processing product objects, comprising:
a collection information determination unit configured to determine multiple product objects in a target collection associated with a user;
a target product object determination unit configured to determine at least one target product object that supports a same target logistics plan from the target collection; and
a page generation unit configured to generate a page corresponding to the target collection, and aggregate the at least one target product object into a same area for display.

25. An apparatus for processing product objects, comprising:
a request receiving unit configured to receive a request for displaying a page corresponding to a target collection;
a target product object determination unit configured to determine multiple product objects in the target collection and at least one target product object supporting a same target logistics plan; and
an aggregation display unit configured to display the page, and aggregate the at least one target product object into a same area for display.

26. An apparatus for processing product objects, comprising:
a collection information determination unit configured to determine multiple product objects in a target collection associated with a first user, wherein the multiple product objects are associated with at least one second user, the first user is a user of a first country, and the second user is a user of a second country;
a target product object determination unit configured to determine at least one target product object that supports a same target logistics plan from the target collection; and
a page generation unit configured to generate a page corresponding to the target collection, and aggregate the at least one target product object into a same area for display;
an order generation unit configured to combine, after receiving a request for transaction order generation, a plurality of target product objects included in the request into a same transaction order for transport through a same target logistics plan, wherein the same target logistics plan includes a first logistics stage and a second logistics stage, the plurality of target product objects is respectively transported to a target collection destination in the second country in the first logistics stage, and the plurality of target product objects is consolidated for shipping to a delivery address associated with the first user in the first country in the second logistics stage.

27. A computer-readable storage medium, on which a computer program is stored, wherein the program, when is executed by a processor, implements the steps of the method according to any one of claims 1-16, 22-23.

28. An electronic device, comprising:
one or more processors; and
a memory associated with the one or more processors, the memory being configured to store program instructions, and the program instructions, when read and executed by the one or more processors, performing the steps of the method according to any one of claims 1-16, 22-23.
